# EUROPÄISCHE PATENTSCHRIFT

(11) **EP 1 375 086 B1**
(45) Veröffentlichungstag und Bekanntmachung des Hinweises auf die Patenterteilung: **09.02.2005**
(21) Anmeldenummer: 03013298.9
(22) Anmeldetag: 13.06.2003
(51) Int. Cl.: B25J 15/00, B25B 11/00, B23Q 3/00

(54) **Pneumatische Einspannvorrichtung zum Halten von Werkstücken oder Werkzeugen**
Pneumatical clamping device for workpieces or tools
Dispositif de serrage pneumatique pour des pieces ou des outil

(30) Priorität: 19.06.2002 DE 20209519 U
(43) Veröffentlichungstag der Anmeldung: 02.01.2004
(73) Patentinhaber: Bosch Rexroth AG, 70442 Stuttgart (DE)
(72) Erfinder: Gerhard, Albert, Dipl.-Ing., 71732 Tamm (DE)
(74) Vertreter: Maiwald Patentanwalts GmbH

(56) Entgegenhaltungen:
- EP-A- 1 041 604
- US-A- 3 773 189
- US-A- 4 611 846
- US-A- 4 648 783
- US-A- 4 696 503
- US-A- 4 697 839

## Beschreibung

Die Erfindung betrifft eine pneumatische Einspannvorrichtung zum Halten von Werkstücken oder Werkzeugen mittels mindestens eines Spannzylinders zur Betätigung von entsprechenden Spannelementen, wobei der Spannzylinder über ein Steuerventil mit Druckluft beaufschlagbar ist. Weiterhin betrifft die vorliegende Erfindung ein Handhabungssystem mit einem Roboter, umfassend eine solche pneumatische Einspannvorrichtung.

Eine pneumatische Einspannvorrichtung der gattungsgemäßen Art geht aus dem Lehrbuch "Automatisierungstechnik in der Fertigung" (Verlag Europa-Lehrmittel, 3. Auflage, 1998, Autorenkollektiv, Seite 89) hervor. Diese pneumatische Einspannvorrichtung des Standes der Technik dient im Sinne einer Bohrvorrichtung dem Halten eines zu bearbeitenden Werkstücks auf dem Maschinentisch einer Bohrmaschine. Das Werkstück wird zu diesem Zwecke in zwei gegenüberliegend nach Art eines Schraubstocks angeordneten Spannelementen fixiert. Eines der beiden Spannelemente ist mittels eines einfachwirkenden, federrückgestellten pneumatischen Spannzylinders bewegbar, so dass über eine Druckluftbeaufschlagung des Spannzylinders ein Einspannen des Werkstücks in die Einspannvorrichtung erfolgt. Hierfür ist mindestens ein Steuerventil (Ventil 1.1) erforderlich, das in diesem Beispiel nach Art eines 3/2-Wegeventils ausgeführt ist.

Eine solche pneumatische Einspannvorrichtung hat sich prinzipiell als wirksam und zuverlässig zum Halten von Werkstücken oder Werkzeugen erwiesen, wobei gewöhnlich die Ventiltechnik fern der Einspannvorrichtung - meist innerhalb einer Ventileinheit - angeordnet ist. Eine derartige pneumatische Einspannvorrichtung des Standes der Technik eignet sich deshalb eher nicht zum Einsatz im Rahmen von Handhabungssystemen, bei denen beispielsweise ein Roboter die Einspannvorrichtung zwischen verschiedenen Orten transportiert. Die verschiedenen Orte können unterschiedliche Aufnahme- und Abgabepositionen oder Arbeitspositionen im Arbeitsbereich des Roboters sein. Der Roboter nimmt bei den hier interessierenden Handhabungssystemen eine auf eine Abgabeposition bereitgestellte Einspannvorrichtung samt hierin eingespanntem Werkstück auf und transportiert diese zur Arbeitsposition. An der Arbeitsposition wird das Werkstück - beispielsweise durch Schweißen an ein Trägergestell - verbaut. Anschließend öffnet der Roboter die Einspannvorrichtung und transportiert die insoweit leere Einspannvorrichtung zu einer Abgabeposition, von der aus ein wiederholtes Bestücken der Einspannvorrichtung mit einem neuen Werkstück erfolgen kann. Dieser Arbeitszyklus wiederholt sich.

Bei dieser speziellen Anwendung einer pneumatischen Einspannvorrichtung stören die von der Ventileinheit zum Druckmittelzylinder führenden Druckmittelleitungen, was den Aktionsbereich des Roboters praktisch einschränkt. Weiterhin können Störungen durch Abreißen von Druckmittelleitungen auftreten.

In der Praxis haben sich für die vorstehend erläuterten Anwendungen daher Einspannvorrichtungen durchgesetzt, die ohne außenliegende Leitungen über mechanische Federspannsysteme oder dergleichen die Mobilität der Einspannvorrichtung gewährleisten. Allerdings tritt hierbei der Nachteil auf, dass derartige Einspannvorrichtungen in aufwendiger Weise mechanisch zu verriegeln sind und erhebliche Betätigungskräfte erfordern.

Es ist daher die Aufgabe der vorliegenden Erfindung eine gattungsgemäße pneumatische Einspannvorrichtung dergestalt weiter zu verbessern, dass diese zum Einen mobil einsatzfähig ist und zum Anderen auch leicht bedienbar oder betätigbar ist.

Die Aufgabe wird ausgehend von einer pneumatischen Einspannvorrichtung gemäß dem Oberbegriff des Anspruchs 1 in Verbindung mit dessen kennzeichnenden Merkmalen gelöst. Hinsichtlich eines kompletten Handhabungssystems wird die Aufgabe durch Anspruch 10 gelöst. Die jeweils rückbezogenen abhängigen Ansprüche geben vorteilhafte Weiterbildungen der Erfindung wieder.

Die Erfindung schließt die technische Lehre ein, dass der Spannzylinder mit seinen Spannelementen sowie das zur Druckluftbeaufschlagung erforderliche Steuerventil zu einer mobilen Baueinheit zusammengefasst sind, die außerdem Mittel zur autarken Druckluftversorgung für den Spannzylinder umfasst, um trotz Mobilität der Baueinheit stets den gespannten Zustand der Spannelemente zu gewährleisten.

Der Vorteil dieser Lösung liegt insbesondere darin, dass bei der pneumatischen Einspannvorrichtung auf außenliegende Druckmittelleitungen gänzlich verzichtet werden kann, was den hier angestrebten Einsatzbereich im Rahmen des speziellen Handhabungssystems erschließt. Obwohl die Baueinheit auf permanente Druckmittelleitungen verzichtet, kann trotzdem der Druck innerhalb des Spannzylinders über die integrierten Mittel zur autarken Druckluftversorgung aufrechterhalten werden, so dass der gespannte Zustand garantiert werden kann. Somit können undefinierte Zustände der pneumatischen Einspannvorrichtung vermieden werden. Es entfallen somit zusätzliche mechanische Mittel - wie Federn oder dergleichen - um den gespannten Zustand der Einspannvorrichtung sicher zu stellen.

Vorzugsweise besteht das in die Baueinheit integrierte Mittel zur autarken Druckluftversorgung aus einer mit elektrischer Energie betreibbaren Kompressoreinheit, die über eine elektrische Batterieeinheit mit elektrischer Energie versorgbar ist. Dabei wird mit der elektrischen Energie ein Elektromotor oder ein elektrischer Schwingantrieb der Kompressoreinheit gespeist, dessen mechanische Bewegung zum Verdichten von aus der Umgebung angesaugter Luft über eine entsprechende Verdichtereinheit umgesetzt wird. Vorzugsweise bietet sich an, die elektrisch betreibbare Kompressoreinheit nach Art eines kleinbauenden Niederspannungs-Membrankompressors auszubilden. Ein solcher Kompressor ist beispielsweise aus der Kfz-Technik als Zubehör zum behelfsmäßigen Aufpumpen von Reifen eines Kraftfahrzeuges im Pannenfall bekannt. Bei dem erfindungsgemäßen Einsatzfall wird der Druckluftbedarf der pneumatischen Einspannvorrichtung über eine entsprechende Drucksensorik ermittelt, so dass die Kompressoreinheit im Bedarfsfall automatisch den Betrieb aufnimmt.

Vorzugsweise ist die die Kompressoreinheit mit elektrischer Energie versorgende Batterieeinheit nach Art eines Akkumulators als Energiespeicher ausgebildet, der entweder über einen externen elektrischen Anschluss oder über ein direkt in die mobile Baueinheit integriertes Solarelement wiederaufladbar ist.

Gemäß einer weiteren Ausführungsform der Erfindung kann das Mittel zur autarken Druckluftversorgung auch aus einem wiederauffüllbaren Druckluftbehälter als Energiespeicher bestehen, der in die Baueinheit integriert ist. Der Druckluftbehälter kann entweder über einen entsprechenden externen Druckluftanschluss wiederauffüllbar ausgeführt werden; es ist jedoch auch denkbar, den Druckluftbehälter selbst auswechselbar - beispielsweise in Form einer Druckpatrone - auszubilden. Diese alternative Ausführungsform des Mittels zur autarken Druckluftversorgung ist jedoch nur dann anwendbar, wenn die so gespeicherte Druckluft dafür ausreicht, um über längere Zeiträume zuverlässig ein Halten des in die pneumatische Einspannvorrichtung eingespannten Werkstückes zu gewährleisten.

Eine weitere die Erfindung verbessernde Maßnahme besteht darin, dass die als mobile Baueinheit ausgebildete pneumatische Einspannvorrichtung mit elektrischen oder mechanischen Bedienmitteln - beispielsweise elektrischen Schaltern oder dergleichen - ausgestattet ist, um ein Öffnen und Schließen der Spannelemente zum Zwecke des Werkstückwechsels zu ermöglichen. Wegen des pneumatischen Einspannprinzips können hierfür Bedienmittel zum Einsatz kommen, die ein für den Anwender komfortables Öffnen und Schließen der Einspannvorrichtung ermöglichen.

Die erfindungsgemäße pneumatische Einspannvorrichtung wird vorzugsweise im Rahmen eines Handhabungssystems mit mindestens einem Roboter eingesetzt, der zwischen mindestens einer Arbeitsposition zur Durchführung eines Produktionsschrittes an einer getakteten Produktionsanlage und mindestens einer Aufnahme-/Abgabeposition zum Wechseln von zwischengepufferten Werkstücken agiert. Hierbei wird jedes zu verbauende Werkstück in einer eigenen pneumatischen Einspannvorrichtung gehalten, welche mit dem Roboter entsprechend der vorgegebenen Taktung zur Arbeitsposition hin und von dieser weg transportiert wird.

Vorzugsweise ist der Roboter an seiner Aufnahme für die pneumatische Einspannvorrichtung mit mindestens einem pneumatischen Anschluss und/oder mindestens einem elektrischen Anschluss zur Speisung der mobilen pneumatischen Einspannvorrichtung während der Zeitdauer des Transports mit Druckluft bzw. elektrischem Strom ausgerüstet. Ist die vom Roboter ausgeführte Transportzeit für die pneumatische Einspannvorrichtung genügend lang, so kann während dieser Zeitdauer ein Wiederaufladen bzw. Wiederaufüllen des Energiespeichers (Akkumulator oder Druckbehälter) erfolgen.

Die Aufnahme-/Abgabeposition sowie auch die Arbeitsposition im Handhabungssystem kann beispielsweise durch eine Position auf einem Fließband oder auf einem Drehtisch oder dergleichen definiert sein.

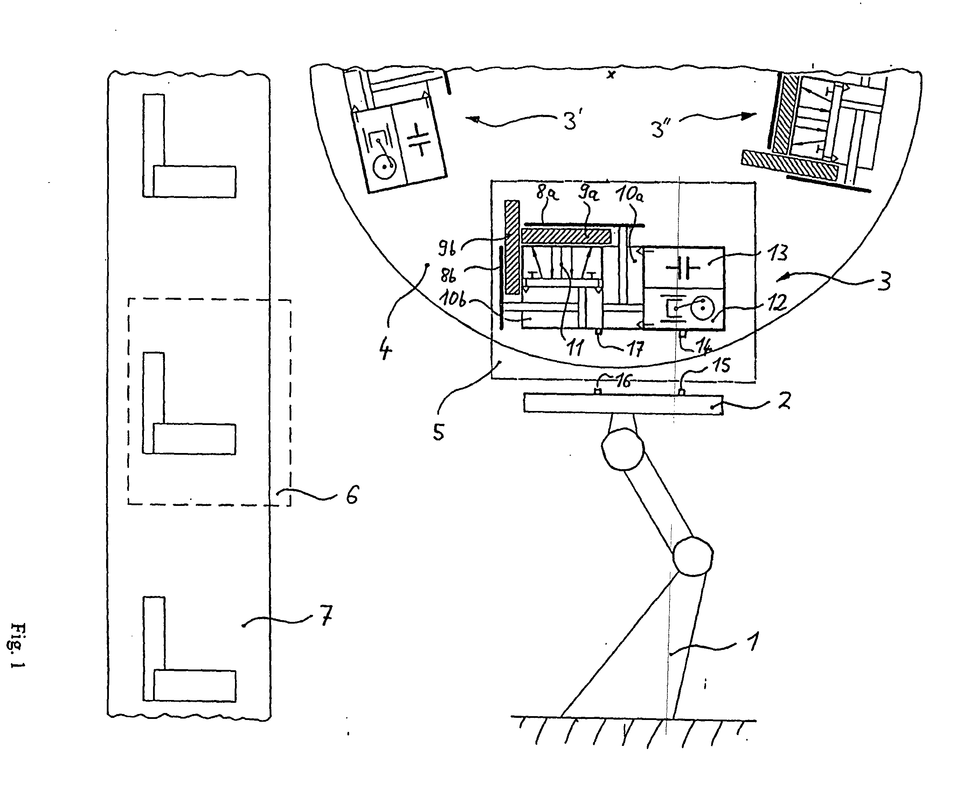

Weitere die Erfindung verbessernde Maßnahmen werden nachstehend gemeinsam mit der Beschreibung eines bevorzugten Ausführungsbeispiels anhand der einzigen Figur näher dargestellt. Diese zeigt eine schematische Darstellung eines Handhabungssystems mit einer erfindungsgemäßen mobilen pneumatischen Einspannvorrichtung.

Das Handhabungssystem besteht im Wesentlichen aus einem Roboter 1, der hier entsprechend des erforderlichen Arbeitsbereiches mehrere Achsen (Freiheitsgrade) aufweist. Das distale Ende des Roboters 1 mündet in eine Aufnahme 2. Die Aufnahme 2 dient der Ankopplung einer bereitgestellten pneumatischen Einspannvorrichtung 3. Mehrere gleichartige pneumatische Einspannvorrichtungen 3, 3', 3" sind auf einem Drehtisch 4 bereitgestellt. Der Drehtisch 4 weist eine Aufnahme-/Abgabeposition 5 auf, von der aus der Roboter 1 eine pneumatische Einspannvorrichtung 3 aufnimmt oder diese nach Durchführung eines Produktionsschrittes wieder ablegt. Zur Durchführung des Produktionsschrittes ist eine Arbeitsposition 6 vorgesehen, die einem Fließband 7 zugeordnet ist.

Jede pneumatische Einspannvorrichtung 3 besteht im Wesentlichen aus Spannelementen 8a, 8b zum Halten von Werkstücken 9, welche insoweit relativ zueinander positioniert werden. Die Spannelemente 8a, 8b werden über jeweils zugeordnete Spannzylinder 10a, 10b betätigt, das heißt in eine geöffnete oder geschlossene Position überführt. Dementsprechend werden die Spannzylinder 10a, 10b über ein hiermit in Verbindung stehendes Steuerventil 11 angesteuert. Neben den Spannelementen 8a, 8b in zugeordneten Spannzylindern 10a, 10b sowie dem Steuerventil 11 umfasst die als mobile Baueinheit ausgebildete pneumatische Einspannvorrichtung weiterhin auch Mittel zur autarken Druckluftversorgung für die Spannzylinder 10a, 10b, so dass diese trotz Mobilität der Baueinheit stets den gespannten Zustand der Spannelemente 8a, 8b beibehält. Die Mittel zur autarken Druckluftversorgung sind in diesem Ausführungsbeispiel als eine speisedruckseitig mit dem Steuerventil 11 in Verbindung stehende Kompressoreinheit 12 ausgeführt, die elektrisch betreibbar ist. Die elektrisch betreibbare Kompressoreinheit 12 ist hier nach Art eines kleinbauenden Niederspannungs-Membrankompressors ausgebildet, der dann in Betrieb genommen wird, wenn eine - hier nicht weiter dargestellte - Drucksensorik einen Druckluftbedarf ermittelt. Der Druckluftbedarf entsteht dann, wenn der in den Spannzylindern 10a, 10b herrschende Druck einen definierten Schwellenwert unterschreitet. Der Schwellenwert richtet sich nach der von den Spannelementen 8a, 8b aufzubringenden Spannkraft zum Halten der Werkstücke 9. Die Energieversorgung der elektrisch betreibbaren Kompressoreinheit 12 erfolgt über eine benachbart hierzu angeordnete und insoweit ebenfalls in die mobile Baueinheit integrierte elektrische Batterieeinheit 13, die in Form eines Akkumulators ausgebildet ist, um ein Wiederaufladen zu ermöglichen. Zum Wiederaufladen der elektrischen Batterieeinheit 13 wird hier ein externer elektrischer Anschluss 14 genutzt, der korrespondierend mit einem an der Aufnahme 2 des Roboter 1 ausgebildeten elektrischen Anschlusses 15 ausgeführt ist. Somit erfolgt ein Wiederaufladen der elektrischen Batterieeinheit 13 während der Zeitdauer des Transports der mobilen pneumatischen Einspanneinrichtung zwischen der Aufnahme /Abgabeposition 5 und der Arbeitsposition 6. Neben dem elektrischen Anschluss 14 weist die pneumatische Einspannvorrichtung 3 auch einen externen Druckluftanschluss 16 auf, der korrespondierend mit einem Druckluftanschluss 17 an der Aufnahme 2 des Roboter 1 ausgebildet ist.

Die vorliegende Erfindung ist nicht beschränkt auf das vorstehend beschriebene bevorzugte Ausführungsbeispiel. Es sind vielmehr auch Abwandlungen hiervon denkbar, die vom Schutzbereich der nachfolgenden Ansprüche umfasst sind. So ist es beispielsweise auch denkbar, die Mittel zur autarken Druckluftversorgung für den oder die Spannzylinder der Einspannvorrichtung als wiederauffüllbaren oder auswechselbaren Druckluftbehälter auszubilden, wobei allerdings die Energiespeicherkapazität gegenüber dem vorstehend beschriebenen bevorzugten Ausführungsbeispiel etwas geringer ist.

### Bezugszeichenliste

- **1**: Roboter
- **2**: Aufnahme
- **3**: Einspannvorrichtung
- **4**: Drehtisch
- **5**: Aufnahme-/Abgabeposition
- **6**: Arbeitsposition
- **7**: Fließband
- **8**: Spannelemente
- **9**: Werkstück
- **10**: Spannzylinder
- **11**: Steuerventil
- **12**: Kompressoreinheit
- **13**: Batterieeinheit
- **14**: Elektrischer Anschluss (vorrichtungsseitig)
- **15**: Elektrischer Anschluss (roboterseitig)
- **16**: Pneumatischer Anschluss (roboterseitig)
- **17**: Pneumatischer Anschluss (vorrichtungsseitig)

## Patentansprüche

1. Pneumatische Einspannvorrichtung zum Halten von Werkstücken (9) oder Werkzeugen mittels mindestens eines Spannzylinders (10a, 10b) zur Betätigung von entsprechenden Spannelementen (8a, 8b), wobei der Spannzylinder (10a, 10b) über ein Steuerventil (11) mit Druckluft beaufschlagbar ist,
**dadurch gekennzeichnet, dass** das Steuerventil (11) und der Spannzylinder (10a, 10b) mit den Spannelementen (8a, 8b) zu einer mobilen Baueinheit zusammengefasst sind, die außerdem Mittel zur autarken Druckluftversorgung für den Spannzylinder (10a, 10b) umfasst, um trotz Mobilität der Baueinheit stets den gespannten Zustand der Spannelemente (8a, 8b) zu gewährleisten.

2. Pneumatische Einspannvorrichtung nach Anspruch 1,
**dadurch gekennzeichnet, dass** das Mittel zur autarken Druckluftversorgung aus einer mit elektrischer Energie betreibbaren Kompressoreinheit (12) besteht, die über eine elektrische Batterieeinheit (13) mit elektrischer Energie versorgbar ist.

3. Pneumatische Einspannvorrichtung nach Anspruch 2,
**dadurch gekennzeichnet, dass** die elektrisch betreibbare Kompressoreinheit (12) nach Art eines kleinbauenden Niederspannungs-Membrankompressors ausgebildet ist, der im Falle eines über eine Drucksensorik ermittelbaren Druckluftbedarfs automatisch den Betrieb aufnimmt.

4. Pneumatische Einspannvorrichtung nach Anspruch 2,
**dadurch gekennzeichnet, dass** die elektrische Batterieeinheit (13) nach Art eines Akkumulators ausgebildet ist.

5. Pneumatische Einspannvorrichtung nach Anspruch 4,
**dadurch gekennzeichnet, dass** die elektrische Batterieeinheit (13) mittels eines in die mobile Baueinheit integrierten Solarelements wiederaufladbar ist.

6. Pneumatische Einspannvorrichtung nach Anspruch 4,
**dadurch gekennzeichnet, dass** die Wiederaufladung der elektrischen Batterieeinheit (13) über einen an der mobilen Baueinheit angeordneten externen elektrischen Anschluss (14) erfolgt.

7. Pneumatische Einspannvorrichtung nach Anspruch 1,
**dadurch gekennzeichnet, dass** das Mittel zur autarken Druckluftversorgung aus einem wiederauffüllbaren und/oder auswechselbaren Druckluftbehälter besteht.

8. Pneumatische Einspannvorrichtung nach Anspruch 7,
**dadurch gekennzeichnet, dass** die mobile Baueinheit zum Auffüllen des integrierten Druckluftbehälters über einen externen Druckluftanschluss (16) verfügt.

9. Pneumatische Einspannvorrichtung nach einem der vorstehenden Ansprüche,
**dadurch gekennzeichnet, dass** die mobile Baueinheit weiterhin elektrische oder mechanische Bedienmittel zum manuellen Öffnen und Schließen der Spannelemente (8a, 8b) zum Zwecke eines Werkstück- bzw. Werkzeugwechsels aufweist.

10. Handhabungssystem mit mindestens einem Roboter (1), der zwischen mindestens einer Arbeitsposition (6) zur Durchführung eines Produktionsschrittes an einer getakteten Produktionsanlage und mindestens einer Aufnahme-/Abgabeposition (5) zum Wechseln von zwischengepufferten Werkstücken (9) oder Werkzeugen agiert,
**dadurch gekennzeichnet, dass** die zwischengepufferten Werkstücke (9) bzw. Werkzeuge in jeweils zugeordneten mobilen pneumatischen Einspannvorrichtungen (3, 3', 3") gemäß einem der vorstehenden Ansprüche gehalten sind, welche mit dem Roboter (1) entsprechend der vorgegebenen Taktung zur Arbeitsposition (6) hin und von dieser weg transportierbar sind.

11. Handhabungssystem nach Anspruch 10,
**dadurch gekennzeichnet, dass** der Roboter (1) an einer Aufnahme (2) für die pneumatische Einspannvorrichtung (3) mindestens einen pneumatischen Anschluss (16) und/oder mindestens einen elektrischen Anschluss (15) zur Speisung der mobilen pneumatischen Einspannvorrichtung (3) während der Zeitdauer des Transports mit Druckluft bzw. elektrischem Strom aufweist.

12. Handhabungssystem nach Anspruch 10,
**dadurch gekennzeichnet, dass** die Aufnahme-/Abgabeposition (5) und die Arbeitsposition (6) durch eine Position auf einem Fließband (7) oder auf einem Drehtisch (4) definiert ist.

## Claims

1. A pneumatic clamp apparatus for holding work pieces (9) or tools by means of at least one clamp cylinder (10a, 10b) to actuate corresponding clamp elements (8a, 8b), wherein said clamp cylinder (10a, 10b) can have pressurized air applied to it via a control valve (11),
**characterized in that** said control valve (11) and said clamp cylinder (10a, 10b) are combined together with said clamp elements (8a, 8b) to form a mobile assembly, which also comprises a means for an independent pressurized-air supply for the clamp cylinder (10a, 10b) in order to ensure that said clamp elements (8a, 8b) are always in a clamped state while the assembly remains mobile.

2. The pneumatic clamp apparatus according to claim 1,
**characterized in that** said means for independent pressurized-air supply is comprised of a compressor unit (12) to be operated with electric power, wherein the electric power can be supplied by an electric battery unit (13).

3. The pneumatic clamp apparatus according to claim 2,
**characterized in that** said electrically operable compressor unit (12) is configured in the manner of a structurally small low-voltage diaphragm compressor which, in the case of a pressurized-air demand to be determined by pressure sensor means, starts operating automatically.

4. The pneumatic clamp apparatus according to claim 2,
**characterized in that** said electric battery unit (13) is configured as an accumulator.

5. The pneumatic clamp apparatus according to claim 4,
**characterized in that** said electric battery unit (13) is rechargeable by means of a solar element integrated into the mobile assembly.

6. The pneumatic clamp apparatus according to claim 4,
**characterized in that** the recharging of said electric battery unit (13) is carried out via an external electric terminal (14) arranged at said mobile assembly.

7. The pneumatic clamp apparatus according to claim 1,
**characterized in that** said means for independent pressurized-air supply is a refillable and/or replaceable pressurized-air container.

8. The pneumatic clamp apparatus according to claim 7,
**characterized in that** said mobile assembly has an external pressurized-air connection (16) for refilling the integrated pressurized air container.

9. The pneumatic clamp apparatus according to any one of the preceding claims,
**characterized in that** said mobile assembly also has electrical or mechanic operating means for manually opening and closing said clamp elements (8a, 8b) for the purpose of workpiece and/or tool replacement.

10. A handling system, having at least one robot (1), operating between at least one work position (6) for carrying out a production step on a clocked production facility, and at least one pick-up/lay-down position (5) for the replacement of buffered workpieces (9) or tools,
**characterized in that** said buffered workpieces (9) or tools are held in associated mobile pneumatic clamp devices (3, 3', 3") according to any one of the preceding claims, and which are transportable to and from the work position (6) by the robot (1) according to the predetermined clock.

11. The handling system according to claim 10,
**characterized in that** said robot (1) comprises at least one pneumatic connection (16) and/or at least one electrical connection (15) at a receiving means (2) for the pneumatic clamp apparatus (3) to feed the mobile pneumatic clamp apparatus (3) with pressurized air or electric current in the duration of the transport.

12. The handling system according to claim 10,
**characterized in that** said pick-up/lay-down position (5) and said work position (6) are defined by a position on an assembly line (7) or on a rotary table (4).

## Revendications

1. Dispositif de serrage pneumatique pour le maintien de pièces à oeuvrer (9) ou d'outils, à l'aide d'au moins un cylindre de serrage (10a, 10b) destiné à actionner des éléments de serrage correspondants (8a, 8b), ledit cylindre de serrage (10a, 10b) pouvant être alimenté en air comprimé via une valve de commande (11),
**caractérisé en ce que** la valve de commande (11) et le cylindre de serrage (10a, 10b) sont regroupés avec les éléments de serrage (8a, 8b) en une unité structurelle mobile qui comprend en outre des moyens pour une alimentation autarcique en air comprimé pour le cylindre de serrage (10a, 10b) afin de garantir constamment l'état serré des éléments de serrage (8a, 8b) malgré la mobilité de l'unité structurelle.

2. Dispositif de serrage pneumatique selon la revendication 1, **caractérisé en ce que** les moyens pour une alimentation autarcique en air comprimé sont constitués par une unité à compresseur (12) fonctionnant à l'énergie électrique, qui peut être alimentée en énergie électrique via une unité à batterie électrique (13).

3. Dispositif de serrage pneumatique selon la revendication 2, **caractérisé en ce que** l'unité à compresseur (12) fonctionnant à l'énergie électrique est réalisée à la manière d'un compresseur à diaphragme à basse tension et de petite taille, qui entre automatiquement en service dans le cas d'un besoin en air comprimé constaté par un système de détection de pression.

4. Dispositif de serrage pneumatique selon la revendication 2, **caractérisé en ce que** l'unité à batterie électrique (13) est réalisée à la manière d'un accumulateur.

5. Dispositif de serrage pneumatique selon la revendication 4, **caractérisé en ce que** l'unité à batterie électrique (13) est rechargeable au moyen d'un élément de capteur solaire intégré dans l'unité structurelle mobile.

6. Dispositif de serrage pneumatique selon la revendication 4, **caractérisé en ce que** la recharge de l'unité à batterie électrique (13) a lieu via un raccord électrique externe (14) agencé sur l'unité structurelle mobile.

7. Dispositif de serrage pneumatique selon la revendication 1, **caractérisé en ce que** les moyens pour l'alimentation autarcique en air comprimé sont constitués par un réservoir d'air comprimé reremplissable et/ou interchangeable.

8. Dispositif de serrage pneumatique selon la revendication 7, **caractérisé en ce que** l'unité structurelle mobile dispose d'un raccord à air comprimé externe (16) pour le remplissage du réservoir d'air comprimé intégré.

9. Dispositif de serrage pneumatique selon l'une des revendications précédentes, **caractérisé en ce que** l'unité structurelle mobile comprend en outre des organes de manipulation électriques ou mécaniques pour l'ouverture et la fermeture manuelle des éléments de serrage (8a, 8b) dans le but d'un échange de la pièce à oeuvrer ou de l'outil.

10. Système de manipulation comprenant au moins un robot (1), qui agit entre au moins une position de travail (6) pour exécuter une opération de production dans une installation de production cadencée, et au moins une position de réception/livraison (5) pour échanger des pièces à oeuvrer (9) ou des outils placé(e)s dans un réservoir tampon, **caractérisé en ce que** les pièces à oeuvrer (9) ou les outils placé(e)s dans un réservoir tampon sont maintenu(e)s dans des dispositifs de serrage pneumatiques mobiles (3, 3', 3") selon l'une des revendications précédentes, qui leur sont respectivement associés, lesdits dispositifs étant transportables au moyen du robot (1) selon la cadence prédéterminée, en rapprochement de la position de travail (6) et en éloignement de celle-ci.

11. Système de manipulation selon la revendication 10, **caractérisé en ce que** le robot (1) comprend, au niveau d'un récepteur (2) pour le dispositif de serrage pneumatique (3), au moins un raccord pneumatique (16) et/ou au moins un raccord électrique (15) pour l'alimentation du dispositif de serrage pneumatique mobile (3), pendant la durée du transport, avec de l'air comprimé ou avec du courant électrique.

12. Système de manipulation selon la revendication 10, **caractérisé en ce que** la position de réception/livraison (5) et la position de travail (6) sont définies par une position sur une courroie transporteuse (7) ou sur une table tournante (4).
